(19) Europäisches Patentamt
European Patent Office
Office européen des brevets

(11) **EP 4 528 840 A1**

(12) **EUROPEAN PATENT APPLICATION**
published in accordance with Art. 153(4) EPC

(43) Date of publication:
26.03.2025 Bulletin 2025/13

(21) Application number: 22966073.3

(22) Date of filing: 22.11.2022

(51) International Patent Classification (IPC):
*H01M 4/13* (2010.01)      *H01M 10/0525* (2010.01)

(52) Cooperative Patent Classification (CPC):
**H01M 4/13; H01M 10/0525;** Y02E 60/10

(86) International application number:
**PCT/CN2022/133402**

(87) International publication number:
**WO 2024/108372 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Central, Central And Western District (HK)**

(72) Inventors:
• **CHEN, Ning
Ningde, Fujian 352100 (CN)**

• **SHI, Dongyang
Ningde, Fujian 352100 (CN)**
• **CHENG, Zhipeng
Ningde, Fujian 352100 (CN)**
• **WANG, Yuzhen
Ningde, Fujian 352100 (CN)**
• **DENG, Yaqian
Ningde, Fujian 352100 (CN)**
• **JIN, Haizu
Ningde, Fujian 352100 (CN)**
• **LI, Baiqing
Ningde, Fujian 352100 (CN)**

(74) Representative: **Kraus & Lederer PartGmbB
Thomas-Wimmer-Ring 15
80539 München (DE)**

(54) **ELECTRODE ASSEMBLY, SECONDARY BATTERY, AND ELECTRIC DEVICE**

(57)     This application provides an electrode assembly, a secondary battery, and an electric apparatus, considering the changing of NP value of the electrode assembly with the increasing of the number of cycles or storage days. The application considers the design of the NP value corresponding to a current capacity retention rate of not less than m. For a storage proportion ranging 0.5-0.8, an upper limit of NP decreases as the storage proportion increases, so a smaller NP value can be designed. This is conducive to reducing the total amount of negative electrode material and maximizing the reuse of the non-decayed lithium intercalation and deintercalation capacity of a silicon-doped negative electrode, thus achieving low cost. In addition, the reduction in the total amount of negative electrode material reduces swelling force of a secondary battery during cycling, reducing the risk of significant performance degradation of the secondary battery during cycling caused by excessive swelling force, thus achieving a long service life. Moreover, the reduction in the total amount of negative electrode material saves more space to further increase energy density while ensuring that the driving range is not affected during the life cycle.

Determine a storage proportion of a target secondary battery denoted as S, and determine an NP value of a reference secondary battery at the first charge or the first discharge denoted as $Y_0$ ⟶ S100

Determine, according to a formula $\left| Y_{0,s} = \frac{Y_0(1 - r - na)}{(1 - na)(1 - r)} \right|$, an NP value of the target secondary battery at the first charge or the first discharge denoted as $Y_{0,S}$, where, n represents the number of cycles of charge and discharge after which NP of the reference secondary battery is equal to NP of the target secondary battery, and a represents a capacity loss value per cycle of charge and discharge of the reference secondary battery ⟶ S200

FIG. 2

## Description

### TECHNICAL FIELD

This application relates to the field of battery technologies, and in particular, to an electrode assembly, a secondary battery, and an electric apparatus.

### BACKGROUND

The description here provides only background information related to this application and does not necessarily constitute a prior art.

The application of lithium-ion batteries in new energy vehicles is becoming increasingly popular, and the pursuit of high energy density, ultra-long service life, low cost, and the like remains a constant trend in the end market. However, how high energy density, ultra-long service life, and low cost are ensured is a challenge in the industry. To increase the energy density of secondary batteries, the coating weight of negative electrode plates is reduced, that is, a smaller NP value is designed. This will lead to insufficient NP in the charging process, resulting in lithium precipitation and reducing service life. On the contrary, to prolong the service life and mitigate the risk of lithium precipitation, a larger NP is designed, but this will lead to a lower energy density.

### SUMMARY

In view of this, it is necessary to provide an electrode assembly, a secondary battery, and an electric apparatus, so as to effectively ensure high energy density and long service life.

According to a first aspect, this application provides an electrode assembly. The electrode assembly includes a positive electrode plate and a negative electrode plate, where NP corresponding to the electrode assembly with a current capacity retention rate of not less than m and S satisfy the following conditions: $1.17-0.35S \leq NP \leq -0.41S+1.36$, $50\% \leq S \leq 80\%$, and $m \geq 99\%$, where NP represents a ratio of capacity per unit area of the negative electrode plate to capacity per unit area of the positive electrode plate; S represents a storage proportion of the electrode assembly, where the number of storage days that the electrode assembly is able to reach when its capacity retention rate is 80% under extreme storage is denoted as N1, and the number of cycles that the electrode assembly is able to reach when its capacity retention rate is 80% under extreme cycling of charge and discharge is denoted as N2, and $S=5N1/(5N1+N2)$; the extreme storage refers to storage of the electrode assembly in 100% SoC at an ambient temperature of 60°C; the extreme cycling refers to the electrode assembly being cyclically charged at a rate of 0.5C and discharged at a rate of 1C at 25°C within a range of 0%-100% SoC; and the current capacity retention rate of the electrode assembly refers to a ratio of a current capacity T1 of the electrode assembly to an initial capacity T2 of the electrode assembly.

The foregoing electrode assembly considers the changing of NP value of the electrode assembly with the increasing of the number of cycles or storage days. In this view, this application considers the design of the NP value corresponding to a current capacity retention rate of not less than m. The NP value can be designed based on different storage proportions of the electrode assembly. For example, $1.17-0.35S$ is used as a lower limit of the NP value, and $-0.41S+1.36$ is used as an upper limit of the NP value. For a storage proportion ranging 0.5-0.8, the upper limit and lower limit of NP decrease as the storage proportion increases, so a smaller NP value can be designed. This is conducive to reducing the total amount of negative electrode material and maximizing the reuse of the non-decayed lithium intercalation and deintercalation capacity of a silicon-doped negative electrode, thus achieving low cost. In addition, the reduction in the total amount of negative electrode material reduces swelling force of a secondary battery during cycling, reducing the risk of significant performance degradation of the secondary battery during cycling caused by excessive swelling force, thus achieving a long service life. Moreover, the reduction in the total amount of negative electrode material saves more space to further increase energy density while ensuring that the driving range is not affected during the life cycle.

In some embodiments, NP of the electrode assembly at the first charge or the first discharge is denoted as $Y_{0,S}$, and $Y_{0,S}$ and S satisfy the following condition: $\frac{Y_0(1-S-200a)}{(1-200a)(1-S)} \leq Y_{0,s} \leq \frac{Y_0(1-S-50a)}{(1-50a)(1-S)}$, where $Y_0$ represents an NP value specified at the first charge or the first discharge of a reference electrode assembly, $1.03 \leq Y_0 \leq 1.2$, and a represents a capacity loss value per cycle of charge and discharge of the reference electrode assembly. In this way, NP of an electrode assembly with S>0% at the first charge or the first discharge is determined according to the foregoing formula, which is conducive to reducing the total amount of negative electrode, reducing the designed group margin, reducing the risk of significant performance degradation of the secondary battery during cycling caused by excessive swelling force, thus achieving an ultra-long service life.

In some embodiments, $Y_{0,S}$ and S satisfy the following condition:

$$\frac{Y_0(1-S-200a)}{(1-200a)(1-S)} \leq Y_{0,s} \leq \frac{Y_0(1-S-100a)}{(1-100a)(1-S)}.$$

In this way, the upper limit of NP at the first charge or the first discharge is further limited, which prevents an excessively large designed NP value from affecting the energy density of a secondary battery 100 while prolonging the service life of the secondary battery 100, achieving both high energy density and long service life.

In some embodiments, $Y_0$ further satisfies the following condition: $1.05 \leq Y_0 \leq 1.15$. In this way, further optimizing the value of $Y_0$ makes the designed NP value of the electrode assembly more reasonable, helping to further ensure high energy density and long service life.

In some embodiments, a satisfies the following condition: $0.00016 \leq a \leq 0.00026$. In this way, properly limiting the value of a also ensures a reasonable designed NP value of the electrode assembly, effectively ensuring high energy density and long service life.

In some embodiments, a further satisfies the following condition: $0.00018 \leq a \leq 0.00024$. In this way, further optimizing the value of a makes the designed NP value of the electrode assembly more reasonable, helping to further ensure high energy density and long service life.

In some embodiments, when the storage proportion S is 50%-80%, the NP value of the electrode assembly is 0.89-1.16. Such design provides a range relationship between NP and S, which facilitates the design of the NP value for different silicon amounts. This can not only ensure high energy density and long service life of the secondary battery, but also facilitate setting of the NP value.

In some embodiments, when the storage proportion S is 70%-80%, the NP value of the electrode assembly is 0.95-1.07. In this way, further limiting the value ranges of the storage proportion and NP makes the value of NP more accurate.

In some embodiments, the capacity per unit area of the negative electrode plate is denoted as P1, the capacity per unit area of the positive electrode plate is denoted as P2, and P1 and P2 respectively satisfy the following conditions: $2.3 \ \mathrm{mAh/cm^2} \leq P1 \leq 8.6 \ \mathrm{mAh/cm^2}$ and $1.5 \ \mathrm{mAh/cm^2} \leq P2 \leq 6.8 \ \mathrm{mAh/cm^2}$.

In some embodiments, a coating weight per unit area of the negative electrode plate is within a range of 3.9 $\mathrm{mg/cm^2}$ to 13 $\mathrm{mg/cm^2}$. In this way, limiting the value range of the coating weight per unit area of the negative electrode plate provides guidance on preparation of the negative electrode plate.

In some embodiments, the coating weight per unit area of the negative electrode plate is within a range of 3.9 $\mathrm{mg/cm^2}$ to 10 $\mathrm{mg/cm^2}$.

In some embodiments, a coating weight per unit area of the positive electrode plate is within a range of 6.5 $\mathrm{mg/cm^2}$ to 29 $\mathrm{mg/cm^2}$. In this way, limiting the value range of the coating weight per unit area of the positive electrode plate provides guidance on preparation of the positive electrode plate.

In some embodiments, the coating weight per unit area of the positive electrode plate is within a range of 9 $\mathrm{mg/cm^2}$ to 21 $\mathrm{mg/cm^2}$.

In some embodiments, the negative electrode plate includes a negative electrode active material, the negative electrode active material including at least one of a silicon material and a carbon material. In this way, compared with graphite, silicon has a higher specific capacity. Therefore, doping the negative electrode plate with a silicon-containing active material is conducive to increasing the energy density of the secondary battery.

In some embodiments, the silicon material includes at least one of Si and $SiO_z$ ($0 < z < 2$). In this way, properly designing composition of a silicon-containing material helps to obtain a silicon-containing electrode assembly that meets the requirements.

In some embodiments, the carbon material includes at least one of natural graphite, artificial graphite, mesocarbon microbeads, hard carbon, and soft carbon.

In some embodiments, the carbon material includes natural graphite and artificial graphite.

In some embodiments, a weight percentage of the silicon material in the negative electrode active material is 3%-50%. In this way, properly controlling the percentage of silicon in the negative electrode plate effectively ensures the first-cycle coulombic efficiency of a negative electrode of the electrode assembly while ensuring high energy density.

In some embodiments, the weight percentage of the silicon material in the negative electrode active material is 3%-25%. In this way, further properly controlling the percentage of silicon effectively ensures high energy density and long service life of the electrode assembly.

In some embodiments, the positive electrode plate includes a positive electrode active material, the positive electrode active material being an active substance capable of intercalating and deintercalating lithium ions.

In some embodiments, the positive electrode active material includes: one or more of lithium cobalt oxide, lithium nickel oxide, lithium manganese oxide, lithium nickel manganese oxide, lithium nickel cobalt manganese oxide, and lithium nickel cobalt aluminum oxide; and a compound derived from transition metal or non-transition metal.

In some embodiments, the positive electrode active material includes a lithium-containing transition metal composite oxide, where the transition metal includes at least one selected from nickel, cobalt, manganese, and aluminum. In this way, properly designing composition of a positive electrode material layer helps to obtain a silicon-containing electrode assembly that meets the requirements.

According to a second aspect, this application provides a secondary battery including: a housing; the electrode assembly according to any one of the foregoing embodiments accommodated in the housing; and an electrolyte filled in the housing.

The secondary battery employs the foregoing electrode assembly, which is conducive to reducing the total amount of negative electrode material and maximizing the reuse of the non-decayed lithium intercalation and deintercalation capacity of a silicon-doped negative electrode, thus achieving low cost. In addition, the reduction in the total amount of negative electrode material reduces swelling force of the secondary battery during cycling, reducing the risk of significant performance degradation of the secondary battery during cycling caused by excessive swelling force, thus achieving a long service life.

According to a third aspect, this application provides an electric apparatus including the foregoing secondary battery.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

**BRIEF DESCRIPTION OF DRAWINGS**

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all accompanying drawings, like reference signs denote like components. In the accompanying drawings:

FIG. 1 is a schematic structural exploded view of a secondary battery according to some embodiments of this application;
FIG. 2 is a first schematic flowchart of a design method of NP according to some embodiments of this application; and
FIG. 3 is a second schematic flowchart of a design method of NP according to some embodiments of this application.

100. secondary battery; 10. end cover; 20. electrode assembly; 30. electrode terminal; and 40. housing.

**DESCRIPTION OF EMBODIMENTS**

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skills in the art can understand specific meanings of these terms in this application as appropriate to specific situations.

Currently, from the perspective of market development, application of secondary batteries is becoming more extensive. Secondary batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of secondary batteries, market demands for secondary batteries are also increasing.

The application of secondary batteries in new energy vehicles is becoming increasingly common, and the pursuit for high energy density, ultra-long service life, low cost, and the like remains a constant trend in the end market. However, how high energy density, ultra-long service life, and low cost are ensured is a challenge in the industry.

The applicant has noted that the intrinsic extreme cycling and extreme storage life of a secondary battery have an important effect on the NP value of the battery. In this application, the intrinsic extreme cycling and the extreme storage life are used as basic parameters, and the NP value of the battery is associated with the storage proportion.

Based on this, to solve a problem that high energy density and long service life cannot be effectively ensured due to reduced energy density caused by blindly increasing the NP for longer cycle life of the secondary battery, the applicant has designed an electrode assembly after in-depth research. The design of the NP of the electrode assembly is associated with the storage proportion, and the NP corresponding to the electrode assembly with a current capacity retention rate of not less than m and the storage proportion S satisfy the following conditions: $1.17-0.35S \leq NP \leq -0.41S+1.36$, $50\% \leq S \leq 80\%$, and $m \geq 99\%$.

The foregoing electrode assembly considers the changing of NP value of the electrode assembly with the increasing of the number of cycles of the electrode assembly. In this view, this application considers the design of the NP value corresponding to a current capacity retention rate of not less than m. The NP value can be designed based on different storage proportions of the electrode assembly. For example, $1.17-0.35S$ is used as a lower limit of the NP value, and $-0.41S+1.36$ is used as an upper limit of the NP value. For a storage proportion ranging 0.5-0.8, the upper limit and lower limit of NP decrease as the storage proportion increases, so a smaller NP value can be designed. This is conducive to reducing the total amount of negative electrode material and maximizing the reuse of the non-decayed lithium intercalation and deintercalation capacity of a silicon-doped negative electrode, thus achieving low cost. In addition, the reduction in the total amount of negative electrode material reduces swelling force of a secondary battery during cycling, reducing the risk of significant performance degradation of the secondary battery during cycling caused by excessive swelling force, thus achieving a long service life.

Moreover, the reduction in the total amount of negative electrode material saves more space to further increase energy density while ensuring that the driving range is not affected during the life cycle.

It should be noted that NP refers to a ratio of capacity per unit area of the negative electrode plate to capacity per unit area of the positive electrode plate, which is calculated using the formula $NP = \frac{CW_A * Cap_A * Loading_A}{CW_C * Cap_C * Loading_C}$, where CW represents weight per unit area of a coating material in grams per square centimeter (g/cm$^2$), Cap represents gram capacity of an active material in milliampere hours per gram (mAh/g), and Loading represents a percentage of the active material, with respective subscripts A for negative electrode and subscripts C for positive electrode.

Therefore, if the NP value of the electrode assembly is determined, the weights per unit area of the coating materials on the positive and negative electrode plates can be deduced reversely using the foregoing formula. Certainly, during right confirmation at the later stage, the foregoing formula can be used for reverse deduction to obtain an NP value of an infringing product. For example, an electrode assembly of a competitive product is disassembled, positive and negative electrode plates of the same area are respectively assembled with lithium sheets in a reverse direction, and the capacity performance of the positive and negative electrodes is recorded, and a ratio of the capacity of the negative electrode to the capacity of the positive electrode is the NP value obtained through reverse deduction.

Storage proportion refers to a ratio of the number of storage days that an electrode assembly reaches in an extreme storage process to the number of cycles that the electrode assembly reaches in an extreme cycling process of charge and discharge, where different electrode assemblies have different storage proportions. The service life (days) of an electrode assembly 20 under extreme storage is denoted as N1, the service life of the electrode assembly 20 under extreme cycling of charge and discharge is denoted as N2, and 5N1/(5N1+N2) is defined as a storage proportion of the electrode assembly 20 and denoted as S. The extreme storage refers to storage of a battery in 100% SoC at an ambient temperature of 60°C. The extreme cycling refers to the battery being cyclically charged at a rate of 0.5C and discharged at a rate of 1C at 25°C within a range of 0%-100% SoC. The service life refers to the number of storage days or cycles of the battery reached when a capacity retention rate of the electrode assembly 20 is 80%. The capacity retention rate of the electrode assembly 20 refers to a ratio of a current capacity of the battery fully charged at 0.5C and fully discharged at 1C at 25°C to an initial capacity.

A test method for the current capacity of the electrode assembly 20 may be as follows: A secondary battery 100 containing the electrode assembly 20 is charged at 0.5C under a specified condition (for example, at 25°C) to a full-charge voltage. Then, the secondary battery is constant-voltage charged at the full-charge voltage until a current is less than or equal to 0.05C, left standing for 30 min, and then discharged at 1C to a full-discharge voltage. A capacity value at the end of discharge is recorded as the current capacity of the electrode assembly 20. The initial capacity of the electrode assembly 20 can be obtained in various ways. For example, a new secondary battery 100 is manufactured using the electrode assembly 20 with no electrolyte injected, then the above charging and discharging steps are performed on the new secondary battery 100, and a discharge capacity value is recorded as the initial capacity; or an initial capacity or a rated capacity recorded in factory information of the secondary battery 100 can be directly used as the initial capacity of the electrode assembly 20. Certainly, the initial capacity can alternatively be obtained using other test methods, as long as the initial capacity of the electrode assembly 100 can be actually reflected.

The secondary battery disclosed in the embodiments of this application may be used in, without limitation, electric apparatuses such as vehicles, ships, or aircrafts. The secondary battery disclosed in this application may be used to constitute a power supply system of that electric apparatus.

In the power supply system, the secondary battery may be provided in plurality, and the plurality of secondary batteries may be connected in series, parallel, or series-parallel, where being connected in series-parallel means a combination of series and parallel connections of the plurality of secondary batteries. The plurality of secondary batteries may be directly connected in series, parallel or series-parallel, and then an entirety of the plurality of secondary batteries is accommodated in a box; or certainly, the battery may be formed by a plurality of secondary batteries being connected in series, parallel or series-parallel first to form a battery module and then a plurality of battery modules being connected in series, parallel or series-parallel to form an entirety which is accommodated in the box. The battery may further include other structures. For example, the battery may further include a busbar configured to implement electrical connection between the plurality of secondary batteries. The secondary battery may be cylindrical, flat, cuboid, or of other shapes.

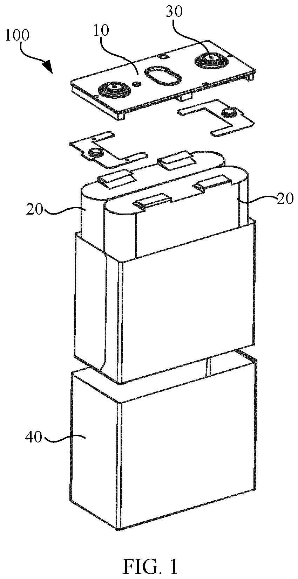

Referring to FIG. 1, FIG. 1 is a schematic structural exploded view of a secondary battery 100 according to some embodiments of this application. The secondary battery 100 is the smallest unit constituting the battery. As shown in FIG. 1, the secondary battery 100 includes an end cover 10, a housing 40, an electrode assembly 20, and other functional components.

The end cover 10 is a component that covers an opening of the housing 40 to isolate an internal environment of the secondary battery 100 from an external environment thereof. Without limitation, a shape of the end cover 10 may fit with that of the housing 40, such that the end cover 10 can match the housing 40. Optionally, the end cover 10 may be made of materials with certain hardness and strength (for example, aluminum alloy), so that the end cover 10 is less likely to deform when subjected to extrusion and collision, allowing the secondary battery 100 to have a higher structural strength and enhanced safety performance. The end cover 10 may be provided with functional components such as an electrode terminal 30. The electrode terminal 30 may be configured to be electrically connected to the electrode assembly 20 for outputting or inputting electrical energy of the secondary battery 100. In some embodiments, the end cover 10 may be further provided with a pressure relief mechanism configured to relieve internal pressure when the internal pressure or temperature in the secondary battery 100 reaches a threshold. The end cover 10 may also be made of various materials, such as copper, iron, aluminum, stainless steel, aluminum alloy, and plastic. This is not particularly limited in the embodiments of this application. In some embodiments, an insulator may also be disposed on an inner side of the end cover 10. The insulator may be configured to isolate an electrically connected component in the housing 40 from the end cover 10 to reduce the risk of short circuit. For example, the insulator may be made of plastic, rubber, or the like.

The housing 40 is an assembly configured to form an internal environment of the secondary battery 100 together with the end cover 10, where the formed internal environment may be configured to accommodate the electrode assembly 20, an electrolyte, and other components. The housing 40 and the end cover 10 may be separate components, an opening may be formed in the housing 40, and the end cover 10 covers the opening to form the internal environment of the secondary battery 100. Without limitation, the end cover 10 and the housing 40 may alternatively be integrated. Specifically, the end cover 10 and the housing 40 may form a shared connection surface before other components are placed inside the housing, and then the end cover 10 covers the housing 40 when inside of the housing 40 needs to be enclosed. The housing 40 may be of various shapes and sizes, such as a cuboid shape, a cylindrical shape, and a hexagonal prism shape. Specifically, a shape of the housing 40 may be determined according to a specific shape and size of the electrode assembly 20. The housing 40 may be made of various materials, such as copper, iron, aluminum, stainless steel, aluminum alloy, and plastic. This is not particularly limited in the embodiments of this application.

The electrode assembly 20 is a component in which electrochemical reactions take place in the secondary battery 100. The housing 40 may include one or more electrode assemblies 20. The electrode assembly 20 is mainly formed by winding or stacking a positive electrode plate and a negative electrode plate, and a separator is typically disposed between the positive electrode plate and the negative electrode plate. Parts of the positive electrode plate and the negative electrode plate that have active substances constitute a body portion of the electrode assembly 20, while parts of the positive electrode plate and the negative electrode plate that have no active substances separately constitute a tab. A positive electrode tab and a negative electrode tab may both be located at one end of the body portion or be located at both ends of the body portion respectively. During charge and discharge of the battery, a positive electrode active substance and a negative electrode active substance react with an electrolyte, and the tabs are connected to the electrode terminal 30 to form a current loop.

According to some embodiments of this application, this application provides an electrode assembly 20. The electrode assembly 20 includes a positive electrode plate and a negative electrode plate. NP corresponding to the electrode assembly 20 with a current capacity retention rate of not less than m and S satisfy the following conditions: $1.17-0.35S \leq NP \leq -0.41S+1.36$, $50\% \leq S \leq 80\%$, and $m \geq 99\%$, where NP represents a ratio of capacity per unit area of the negative electrode plate to capacity per unit area of the positive electrode plate, S represents a storage proportion of the electrode assembly 20, the number of storage days that the electrode assembly 20 is able to reach when its capacity retention rate is 80% under extreme storage is denoted as N1, and the number of cycles that the electrode assembly 20 is able to reach when its capacity retention rate is 80% under extreme cycling of charge and discharge is denoted as N2, where $S=SN1/(SN1+N2)$; the extreme storage refers to storage of the electrode assembly in 100% SoC at an ambient temperature of 60°C; the extreme cycling refers to the electrode assembly being cyclically charged at a rate of 0.5C and discharged at a rate of 1C at 25°C within a range of 0%-100% SoC; and the current capacity retention rate of the electrode assembly 20 refers to a ratio of a current capacity T1 of the electrode assembly 20 to an initial capacity T2 of the electrode assembly 20.

The electrode assembly 20 further includes a separator. The separator is sandwiched between the positive electrode plate and the negative electrode plate. The separator is a porous plastic film that ensures free passage of lithium ions to form a loop and acts as an electronic insulator for preventing two electrodes from coming into contact with each other. A type of the separator may be selected from, but is not limited to, a polyethylene single-layer film, a polypropylene single-layer film, and the like.

NP corresponding to the electrode assembly 20 with the current capacity retention rate of not less than m should be understood as follows: as the number of cycles of charge and discharge or the number of storage days increases, active lithium is consumed due to side reactions, and a local crystal structure of a positive electrode material is changed, resulting in capacity loss, whereas the electrochemical activity of silicon or graphite in a negative electrode material layer is substantially unchanged. Therefore, at the later stage of cycling of charge and discharge, the lithium storage capacity of a negative electrode is excessive and NP tends to increase. In view of this, this application considers controlling the current capacity retention rate of the electrode assembly 20 to be not less than m. For example, the current capacity retention rate of the electrode assembly 20 is not less than 99%, or the electrode assembly 20 is in a first charge or first discharge state (which can also be understood as a newly delivered electrode assembly 20), or the electrode assembly 20 has not been subjected to formation.

According to the storage proportion S of the electrode assembly 20, NP is controlled to be $1.17-0.35S$ to $-0.41S+1.36$. For example, when S is 70%, NP may be 0.925-1.07; and when S is 50%, NP may be 0.997-1.16. Specifically, in some embodiments, when S is 70%, NP may be 1.02-1.06; and when S is 50%, NP may be 1.00-1.06.

Such design allows for a smaller NP value, which is conducive to reducing the total amount of negative electrode material and maximizing the reuse of the non-decayed lithium intercalation and deintercalation capacity of a silicon-doped negative electrode, thus achieving low cost. In addition, the reduction in the total amount of negative electrode material reduces swelling force of the secondary battery 100 during cycling, reducing the risk of significant performance degradation of the secondary battery 100 during cycling caused by excessive swelling force, thus achieving a long service life. Moreover, the reduction in the total amount of negative electrode material saves more space to further increase energy density while ensuring that the driving range is not affected during the life cycle.

According to some embodiments of this application, NP of the electrode assembly 20 at the first charge or the first

$$\frac{Y_0(1-S-200a)}{(1-200a)(1-S)} \leq Y_{0,S} \leq \frac{Y_0(1-S-50a)}{(1-50a)(1-S)}$$

discharge is denoted as $Y_{0,S}$, and $Y_{0,S}$ and S satisfy the following condition:

where $Y_0$ represents an NP value specified at the first charge or the first discharge of a reference electrode assembly, $1.03 \leq Y_0 \leq 1.2$, and a represents a capacity loss value per cycle of charge and discharge of the reference electrode assembly.

The extreme storage refers to storage of the electrode assembly 20 in 100% SoC at an ambient temperature of 60°C. The extreme cycling refers to the electrode assembly 20 being cyclically charged at a rate of 0.5C and discharged at a rate of 1C at 25°C within a range of 0%-100% SoC. Certainly, it can also be understood as that the electrode assembly 20 keeps in a cycling process of charge and discharge.

The reference electrode assembly is an electrode assembly proposed as a reference for obtaining a range of NP values of the electrode assembly 20 of this application or the target electrode assembly (for example, an electrode assembly for which an NP value needs to be designed, and an electrode assembly that needs to be tested), where the NP of the electrode assembly may be preset to one value within the range of 1.03 to 1.2. For example, the reference electrode assembly may be an electrode assembly of the conventional technology.

The first charge of the electrode assembly 20 may be understood as formation of the secondary battery 100, which is intended to make the secondary battery 100 electrochemically active and form a solid electrolyte interface film (SEI film) on the surface of the negative electrode. The first discharge of the electrode assembly 20 refers to the first discharge process of the electrode assembly 20 after formation.

For ease of understanding of the foregoing inequation, the inequation may be simplified to $Y_{0,S} = \frac{Y_0(1-s-na)}{(1-na)(1-s)}$. Since a relationship between values of $Y_{0,S}$ and n is negatively correlated (that is, n can be eliminated from the numerator and the formula may be transformed into $Y_{0,S} = \frac{Y_0}{(1-S)}\left[1 - \frac{S}{(1-na)}\right]$), the value of n may be 50-200. In addition, since

$nas$ in the formula is always greater than 0, the value in $\frac{(1-s-na)}{(1-s-na+nas)}$ should be always less than 1. In this way, the NP of the electrode assembly 20 at the first charge or the first discharge calculated through $Y_{0,S} = \frac{Y_0(1-s-na)}{(1-na)(1-s)}$ should be less than $Y_0$ of the reference electrode assembly at the first charge or the first discharge. To be specific, during design of the NP of the electrode assembly 20, the designed NP value can be reduced based on the storage proportion. This is conducive to reducing the total amount of negative electrode, reducing the designed group margin, and reducing the risk of significant performance degradation of the secondary battery 100 during cycling caused by excessive swelling force, thus achieving an ultra-long service life. In addition, more space is saved to further increase energy density while ensuring that the driving range is not affected during the life cycle.

The NP of the electrode assembly 20 at the first charge or the first discharge is determined according to the foregoing formula, which is conducive to reducing the total amount of negative electrode, reducing the designed group margin, and reducing the risk of significant performance degradation of the secondary battery 100 during cycling caused by excessive swelling force, thus achieving an ultra-long service life. In addition, more space is saved to further increase energy density while ensuring that the driving range is not affected during the life cycle.

According to some embodiments of this application, $Y_{0,S}$ and S satisfy the following condition:

$$\frac{Y_0(1-S-200a)}{(1-200a)(1-S)} \leq Y_{0,S} \leq \frac{Y_0(1-S-100a)}{(1-100a)(1-S)} .$$

Similarly, for ease of understanding, the foregoing inequation may be simplified to $Y_{0,S} = \frac{Y_0(1-s-na)}{(1-na)(1-s)}$, and the value of n may be 100-200. Thus, it can be seen that limiting an upper limit of the inequation of $Y_{0,S}$ can prevent over-amplification of the designed NP from affecting the energy density of the secondary battery 100 while prolonging the service life of the secondary battery 100 when an initial NP is designed.

In this way, the upper limit of NP at the first charge or the first discharge is further limited, which prevents over-amplification of the designed NP from affecting the energy density of the secondary battery 100 while prolonging the service life of the secondary battery 100, ensuring high energy density and long service life.

According to some embodiments of this application, $Y_0$ further satisfies the following condition: $1.05 \leq Y_0 \leq 1.15$.

Similarly, when the NP of the electrode assembly 20 with a storage proportion S at the first charge or the first discharge is designed, the value of $Y_0$ can be controlled to be 1.05-1.15. For example, $Y_0$ being 1.05 or 1.15 is substituted into the foregoing calculation formula for $Y_{0,S}$ for calculation.

Further optimizing the value of $Y_0$ makes the designed NP value of the electrode assembly 20 more proper, helping to further ensure high energy density and long service life.

According to some embodiments of this application, a satisfies the following condition: $0.00016 \leq a \leq 0.00026$.

a represents a capacity loss value per cycle of the reference electrode assembly. A value of a may be one value within a range of 0.00016 to 0.00026.

Properly limiting the value of a also ensures that the designed NP value of the electrode assembly 20 is proper, effectively ensuring high energy density and long service life.

According to some embodiments of this application, a further satisfies the following condition: $0.00018 \leq a \leq 0.00024$.

The value of a may be one value within a range of 0.00018 to 0.00024. For example, a may be, but is not limited to, 0.00018 or 0.00024.

Further optimizing the value of a makes the designed NP value of the electrode assembly 20 more proper, helping to further ensure high energy density and long service life.

According to some embodiments of this application, when the storage proportion S is 50%-80%, the NP value of the electrode assembly 20 is 0.89-1.16.

Value ranges of NP and S can be further limited under a condition that the inequation relationship between NP and S is satisfied. When the storage proportion S is 50%-80%, the NP corresponding to the electrode assembly 20 with the current capacity retention rate of not less than m should be one value within the range of 0.89 to 1.16 (including endpoint values). For example, the NP may be, but is not limited to, 0.89, 1.0, 1.1, 1.15, or 1.16.

Such design provides a range relationship between NP and S, which facilitates the design of the NP value for different silicon amounts. This can not only ensure high energy density and long service life of the secondary battery, but also facilitate setting of the NP value.

According to some embodiments of this application, when the storage proportion S is 70%-80%, the NP value of the electrode assembly is 0.95-1.07.

When the storage proportion S is 70%-80%, the NP value may be, but is not limited to, 0.95, 1.0, 1.01, 1.03, 1.06, or 1.07.

Further limiting value ranges of the storage proportion and NP makes the value of NP more accurate.

According to some embodiments of this application, the negative electrode plate includes a negative electrode material layer, the negative electrode material layer including a silicon-containing active material.

According to some embodiments of this application, the capacity per unit area of the negative electrode plate is denoted as P1, and the capacity per unit area of the positive electrode plate is denoted as P2, P1 and P2 respectively satisfying the following conditions: 2.3 milliampere hours per square centimeter $(mAh/cm^2) \leq P1 \leq 8.6\ mAh/cm^2$; and $1.5\ mAh/cm^2 \leq P2 \leq 6.8\ mAh/cm^2$.

When the NP is designed, the value of NP is taken for different silicon amounts according to the foregoing inequation: $1.17 - 0.35S \leq NP \leq -0.41S + 1.36$; and after the value of NP is determined, since the value of NP is also related to the values of the capacities per unit area of the positive and negative electrode plates, the design can be performed by comprehensively considering the respective value ranges of NP, P1, and P2 during actual manufacturing of the positive and negative electrode plates.

The value of P1 may be one value within a range of $2.3\ mAh/cm^2$ to $8.6\ mAh/cm^2$. For example, P1 may be, but is not limited to, $2.3\ mAh/cm^2$, $3\ mAh/cm^2$, $5\ mAh/cm^2$, or $8.6\ mAh/cm^2$. Similarly, the value of P2 may be one value within a range of $1.5\ mAh/cm^2$ to $6.8\ mAh/cm^2$. For example, P2 may be, but is not limited to, $1.5\ mAh/cm^2$, $3\ mAh/cm^2$, $5\ mAh/cm^2$, or $6.8\ mAh/cm^2$.

Under a condition that the inequation relationship between NP and S is satisfied, the capacities per unit area of the positive and negative electrode plates are limited, facilitating the actual design of the positive and negative electrode plates.

According to some embodiments of this application, the coating weight per unit area of the negative electrode plate is within a range of $3.9\ mg/cm^2$ to $13\ mg/cm^2$.

The capacity per unit area of the negative electrode plate is a product of a gram capacity of an active substance and the coating weight of the active substance per unit area, where the gram capacity is mainly related to the composition of the active substance, and the coating weight per unit area may be, but is not limited to, $3.9\ mg/cm^2$, $4\ mg/cm^2$, $10\ mg/cm^2$, or $13\ mg/cm^2$.

In this way, limiting the value range of the coating weight per unit area of the negative electrode plate provides guidance on preparation of the negative electrode plate.

According to some embodiments of this application, the coating weight per unit area of the negative electrode plate is within a range of $3.9\ mg/cm^2$ to $10\ mg/cm^2$.

The coating weight per unit area may further be, but is not limited to, $3.9\ mg/cm^2$, $4\ mg/cm^2$, or $10\ mg/cm^2$.

According to some embodiments of this application, the coating weight per unit area of the positive electrode plate is within a range of 6.5 mg/cm$^2$ to 29 mg/cm$^2$.

The capacity per unit area of the positive electrode plate is a product of a gram capacity of an active substance and the coating weight of the active substance per unit area, where the gram capacity is mainly related to the composition of the active substance, and the coating weight per unit area may be, but is not limited to, 6.5 mg/cm$^2$, 8 mg/cm$^2$, 10 mg/cm$^2$, or 29 mg/cm$^2$.

In this way, limiting the value range of the coating weight per unit area of the positive electrode plate provides guidance on preparation of the positive electrode plate.

According to some embodiments of this application, the coating weight per unit area of the positive electrode plate is within a range of 9 mg/cm$^2$ to 21 mg/cm$^2$.

The coating weight per unit area of the positive electrode plate may further be, but is not limited to, 9 mg/cm$^2$, 12 mg/cm$^2$, 18 mg/cm$^2$, or 21 mg/cm$^2$.

According to some embodiments of this application, the negative electrode plate includes a negative electrode active material, the negative electrode active material including at least one of a silicon material and a carbon material.

A substance applied on the negative electrode plate includes a negative electrode active material, a conductive agent, and a binder mixed at a specified ratio. The negative electrode active material includes a silicon material and a carbon material. For example, during preparation of the negative electrode active material, a silicon-containing active material can be mixed into graphite in a specified proportion.

The conductive agent refers to a substance capable of increasing conductive contact between active materials and improving the electronic conductivity, for example, conductive graphite, conductive carbon black, conductive carbon fiber, or graphene. The binder is a polymer compound that adheres an active material to a current collector. For example, the binder may be one of a group formed by polyvinylidene fluoride, polyacrylic acid, polymethacrylic acid, polymethyl acrylate, polyethylene acrylate, pure acrylic emulsion, polyacrylic acid-styrene copolymer, polyvinylpyrrolidone, styrene-butadiene rubber, epoxy resin, neopentyl glycol diacrylate, sodium polyacrylate series, polytetrafluoroethylene, polyimide, polyamides, polyester, cellulose derivative, and polysulfones, or one of a group formed by more than two thereof.

Compared with graphite, silicon has a higher specific capacity. Therefore, doping the negative electrode plate with a silicon-containing active material is conducive to increasing the energy density of the secondary battery 100.

According to some embodiments of this application, the silicon material includes at least one of Si and SiOz ($0<z<2$).

In a preparation process, a compound represented by Si and/or SiOz is mixed into graphite in a specified proportion to prepare the negative electrode material layer of the negative electrode plate.

Properly designing composition of a silicon-containing material helps to obtain a silicon-containing electrode assembly 20 that meets the requirements.

According to some embodiments of this application, the carbon material includes at least one of natural graphite, artificial graphite, mesocarbon microbeads (MCMB for short), hard carbon, and soft carbon.

Specifically, in some embodiments, the carbon material includes natural graphite and artificial graphite.

According to some embodiments of this application, a weight percentage of the silicon material in the negative electrode active material is 3%-50%.

Compared with carbon, silicon has a higher specific capacity, but a silicon negative electrode has a lower first-cycle coulombic efficiency. Therefore, when the negative electrode active material is designed, the percentage of silicon may be controlled to be 3%-50%. For example, when the electrode assembly 20 is designed, the silicon material accounting for the above percentage can be doped into the carbon material to obtain a required negative electrode plate.

Properly controlling the percentage of silicon in the negative electrode plate effectively ensures the first-cycle coulombic efficiency of a negative electrode of the electrode assembly while ensuring high energy density.

According to some embodiments of this application, the weight percentage of the silicon material in the negative electrode active material is 3%-25%.

The percentage of silicon in the negative electrode active material may be, but is not limited to, 3%, 5%, 10%, 15%, 20%, or 25%.

Further properly controlling the percentage of silicon effectively ensures high energy density and long service life of the electrode assembly 20.

According to some embodiments of this application, the positive electrode plate includes a positive electrode active material, the positive electrode active material being an active substance capable of deintercalating and intercalating lithium ions.

There are a variety of materials selectable for the positive electrode active material, for example, lithium-containing transition metal oxide and phosphide such as LiCoO2 and LiFePO4.

According to some embodiments of this application, the positive electrode active material includes: one or more of lithium cobalt oxide, lithium nickel oxide, lithium manganese oxide, lithium nickel manganese oxide, lithium nickel cobalt manganese oxide, and lithium nickel cobalt aluminum oxide; and a compound derived from transition metal or non-transition metal.

A variety of materials can be used as the positive electrode active material of this application, for example, layered lithium-containing oxide, spinel-type lithium-containing oxide, or olivine-type lithium-containing phosphate compound. Certainly, the positive electrode active material of this application is not limited to the foregoing materials, and may also use other conventional well-known materials that can be used as positive electrode active substances for lithium-ion batteries. In addition, one type of the foregoing positive electrode active substances may be used alone, or two or more of types may be used in combination.

According to some embodiments of this application, the positive electrode active material includes a lithium-containing transition metal composite oxide, where the transition metal includes at least one selected from nickel, cobalt, manganese, and aluminum.

The positive electrode material layer refers to a structure of an active substance applied on a current collector, including an active material, a conductive agent, and a binder mixed at a specified ratio. The active material refers to a substance containing lithium or lithium iron phosphate. For example, the active material may be expressed by a structural general formula $Li_q(Ni_cCo_dMn_e)O_2$, where $0.9 \leq q \leq 1.2$, $0.2 < c < 1$, $0 < d < 1$, and $q+c+d=1$.

The transition metal may be one selected from nickel, cobalt, manganese, and aluminum or at least one selected from a group consisting of nickel, cobalt, manganese, and aluminum. For example, the transition metal may be a combination of nickel, cobalt, and manganese.

Properly designing composition of the positive electrode material layer helps to obtain the silicon-containing electrode assembly 20 that meets the requirements.

According to some embodiments of this application, this application provides a secondary battery 100. The secondary battery 100 includes a housing 40, the electrode assembly 20 according to any one of the foregoing solutions, and an electrolyte. The electrode assembly 20 is accommodated in the housing 40. The electrolyte is filled in the housing 40.

The electrolyte is a carrier of the secondary battery 100 for lithium ion transport, for example, ethylene carbonate, propylene carbonate, or diethyl carbonate.

The foregoing electrode assembly 20 is used in the foregoing secondary battery 100, which is conducive to reducing the total amount of negative electrode material and maximizing the reuse of the non-decayed lithium intercalation and deintercalation capacity of a silicon-doped negative electrode, thus achieving low cost. In addition, the reduction in the total amount of negative electrode material reduces swelling force of the secondary battery 100 during cycling, reducing the risk of significant performance degradation of the secondary battery 100 during cycling caused by excessive swelling force, thus achieving a long service life.

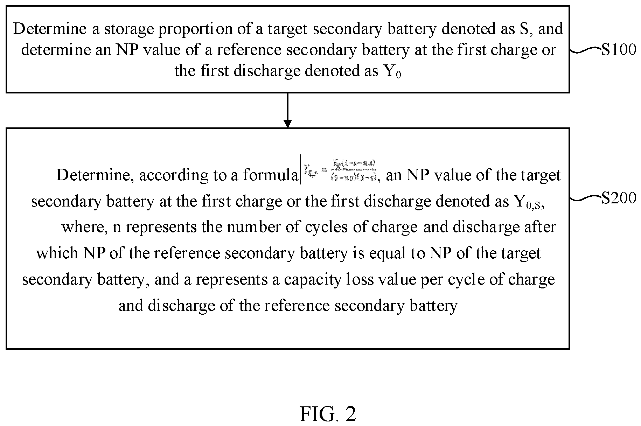

According to some embodiments of this application, referring to FIG. 2, this application provides a design method of NP of secondary battery, where NP refers to a ratio of capacity per unit area of a negative electrode plate to capacity per unit area of a positive electrode plate. The design method includes the following steps:

S100. Determine a storage proportion of a target secondary battery denoted as S, and determine an NP value of a reference secondary battery at the first charge or the first discharge denoted as $Y_0$, where the number of storage days that an electrode assembly is able to reach when its capacity retention rate is 80% under extreme storage is denoted as N1, the number of cycles that the electrode assembly is able to reach when its capacity retention rate is 80% under extreme cycling of charge and discharge is denoted as N2, 5N1/(5N1+N2) is defined as a storage proportion of the electrode assembly, the reference secondary battery refers to a prior-art secondary battery and can also understood as a given or known secondary battery, and $1.03 \leq Y_0 \leq 1.2$.

S200. Determine, according to the formula $Y_{0,s} = \dfrac{Y_0(1-s-na)}{(1-na)(1-s)}$, an NP value of the target secondary battery at the first charge or the first discharge denoted as $Y_{0,S}$, where n represents the number of cycles of charge and discharge after which NP of the reference secondary battery is equal to NP of the target secondary battery, and a represents a capacity loss value per cycle of charge and discharge of the reference secondary battery.

In step S100, the target secondary battery refers to a battery for which NP needs to be designed in this application. The storage proportion of the target secondary battery can be determined based on design requirements or user requirements.

In step S200, the value of a may be obtained from cyclic charge and discharge experiments on the reference secondary battery or may be obtained from experience. For example, a may be one value in the range of 0.00016 to 0.00026 or may be one value in the range of 0.00018 to 0.00024.

The NP determined using the foregoing design method is conducive to reducing a total amount of negative electrode, reducing the designed group margin, and reducing the risk of significant performance degradation of the secondary battery 100 during cycling caused by excessive swelling force, thus achieving an ultra-long service life. In addition, more space is saved to further increase energy density while ensuring that the driving range is not affected during the life cycle.

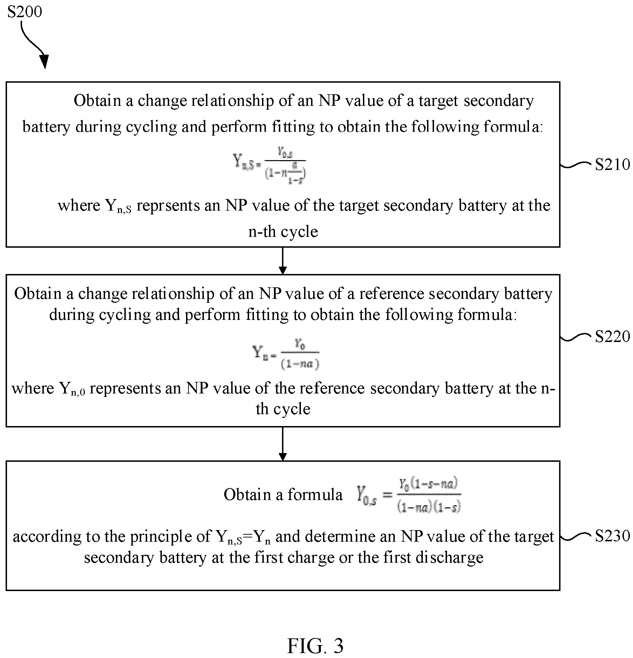

According to some embodiments of this application, referring to FIG. 3, step S200 of determining, according to the following formula, an NP value of the target secondary battery at the first charge or the first discharge and denoting it as $Y_{0,S}$ includes the following steps:

S210. Obtain a change relationship of the NP value of the target secondary battery during cycling and perform fitting to obtain the following formula:

$$Y_{n,S} = \frac{Y_{0,s}}{(1-n\frac{a}{1-s})}$$

, where $Y_{n,S}$ represents an NP value of the target secondary battery at the n-th cycle.

S220. Obtain a change relationship of the NP value of the reference secondary battery during cycling and perform fitting to obtain the following formula:

$$Y_n = \frac{Y_0}{(1-na)}$$

, where $Y_n$ represents an NP value of the reference secondary battery at the n-th cycle.

S230. Obtain a formula $Y_{0,s} = \frac{Y_0(1-s-na)}{(1-na)(1-s)}$ according to the principle of $Y_{n,S}=Y_n$ and determine the NP value of the target secondary battery at the first charge or the first discharge.

The NP design approach of this application is to quantify the dynamic change of NP during cycling based on the failure mechanisms of the positive and negative electrode materials so as to reversely design the NP of the secondary battery 100 based on the NP of the reference secondary battery at the n-th cycle.

In step S210, target secondary batteries with different storage proportions can be subjected to multiple cycles of charge and discharge, NP values after cycles are recorded, and relations of NP, S, and n after different cycles are fitted.

In step S220, the reference secondary battery can be subjected to multiple cycles of charge and discharge, NP values after cycles are recorded, and relations of NP and n after different cycles are fitted.

Since the target secondary battery runs a failure mode that active lithium is consumed in the form of side reactions, the capacity loss is caused by the change of a local crystal structure of a positive electrode material, while silicon or graphite in a negative electrode active material has almost no change in electrochemical activity and always maintains a good capability in deintercalation or intercalation of lithium. Therefore, at the later stage of cycling of the target secondary battery, a lithium storage capacity of a negative electrode is often excessive and NP is always increasing. In view of this, in step S230, maximizing the use of such characteristic of the negative electrode ensures high energy density and long service life. In this application, with comprehensive consideration of the change of the NP during cycling, the NP of the target secondary battery is designed based on the NP value of the reference secondary battery at the n-th cycle.

In this way, using the foregoing design method can reduce the initial NP designed, increase the energy density, reduce the cost, and ensure the cycle life.

According to some embodiments of this application, referring to FIG. 1 to FIG. 3, this application provides a design method of NP of target secondary battery. The dynamic change of NP during cycling can be represented as:

$$Y_{n,s} = \frac{Y_{0,s}}{(1-n\frac{a}{1-s})} \qquad (1).$$

Maximizing the use of such characteristic of the negative electrode ensures high energy density, long service life, and low cost. In the present invention, with comprehensive consideration of the change of the NP during cycling, NP of a silicon-doped negative electrode is designed based on an NP value of a conventional secondary battery at the n-th cycle (preferably the 200th cycle), with a design criterion as follows:

$$Y_{n,S} = Y_n \qquad (2).$$

The formula (2) is substituted into the formula (1) to find $Y_{0,s} = \frac{Y_0(1-s-na)}{(1-na)(1-s)}$.

To make the objectives, technical solutions and advantages of this application clearer and more concise, this application is illustrated with the following specific examples, but this application is not limited to these examples. The examples described below are merely preferable examples of this application and can be used for describing this application. They should not be construed as limitations on the scope of this application. It should be noted that any modifications, equivalent replacements, and improvements made without departing from the spirit and principle of this application shall fall within the protection scope of this application.

To better illustrate this application, the content of this application is further illustrated below with reference to the examples. The specific examples are described below.

Example 1

Positive electrode plate

A positive electrode active substance which was a ternary material nickel cobalt manganese (NCM811), a conductive agent acetylene black, and a binder polyvinylidene fluoride (PVDF) were well mixed at a mass ratio of 97:2:1. The resulting mixture was added into a solvent NMP to prepare a positive electrode slurry. The positive electrode slurry was uniformly applied on a positive electrode current collector aluminum foil, followed by drying at 85°C, cold pressing, die cutting, and slitting, to prepare a lithium-ion battery positive electrode plate.

Negative electrode plate

A negative electrode active substance graphite, commercial silicon oxide, a conductive agent acetylene black, a thickener sodium carboxymethyl cellulose (CMC), and a binder styrene-butadiene rubber (SBR) were added into a solvent water at a mass ratio of 91.2:4.8:2:1:1 and well mixed to prepare a negative electrode slurry. The negative electrode slurry was uniformly applied on a negative electrode current collector copper foil, followed by drying at 85°C and cold pressing, to prepare a lithium-ion battery negative electrode plate in which a percentage of a silicon-containing active material was 5%.

Separator

A polyethylene microporous film was used as a separator substrate. Inorganic aluminum trioxide powder, polyvinylpyrrolidone, and an acetone solvent were well mixed at a weight ratio of 3:1.5:5.5 to prepare a slurry. The slurry was applied on one side of the substrate and dried to obtain a separator.

Electrolyte

Lithium hexafluorophosphate was dissolved in a mixed solvent composed of ethylene carbonate, dimethyl carbonate, and ethyl methyl carbonate (a volume ratio of ethylene carbonate, dimethyl carbonate, and ethyl methyl carbonate was 1:2:1) to obtain a lithium-ion battery electrolyte.

Secondary battery 100

The positive electrode plate, the negative electrode plate, and the separator were wound to obtain an electrode assembly 20. Then, the electrode assembly 20 was subjected to processes such as packaging, electrolyte injection, formation, and degassing to prepare a secondary battery 100. A designed charge NP of the secondary battery 100 was 1.08, a designed capacity of the secondary battery 100 was 100.9 ampere-hour (Ah), and a storage proportion of the battery was 70%.

Example 2

This example was basically the same as Example 1, except that the coating weight of the positive electrode plate was kept unchanged, the coating weight of the negative electrode was reduced, the designed charge NP of the battery was 1.024, and the storage proportion of the battery was 50%.

Example 3

This example was basically the same as Example 1, except that the coating weight of the positive electrode plate was kept unchanged, the coating weight of the negative electrode was reduced, the designed charge NP of the battery was 1.00, and the storage proportion of the battery was 80%.

Example 4

This example was basically the same as Example 1, except that the coating weight of the positive electrode plate was kept unchanged, the coating weight of the negative electrode was reduced, the designed charge NP of the battery was 1.05, and the storage proportion of the battery was 55%.

Example 5

This example was basically the same as Example 1, except that the coating weight of the positive electrode plate was kept unchanged, the coating weight of the negative electrode was reduced, the designed charge NP of the battery was 1.03, and the storage proportion of the battery was 60%.

Blank comparative example

This blank comparative example was basically the same as Example 1, except that the designed charge NP of the battery was 1.10.

Comparative example 1

This comparative example was basically the same as Example 1, except that the designed charge NP of the battery was 1.21.

Comparative example 2

This comparative example was basically the same as Example 2, except that the designed charge NP of the battery was 1.21.

Comparative example 3

This comparative example was basically the same as Example 3, except that the designed charge NP of the battery was 1.10.

Comparative example 4

This comparative example was basically the same as Example 3, except that the coating weight of the positive electrode plate was kept unchanged, the coating weight of the negative electrode was increased, and the designed charge NP of the battery was 1.20.

Comparative example 5

This comparative example was basically the same as Example 4, except that the coating weight of the positive electrode plate was kept unchanged, the coating weight of the negative electrode was increased, and the designed charge NP of the battery was 1.20.

Comparative example 6

This comparative example was basically the same as Example 5, except that the coating weight of the positive electrode plate was kept unchanged, the coating weight of the negative electrode was increased, and the designed charge NP of the battery was 1.20.

Calculation was performed using $Y_{0,s} = \frac{Y_0(1-s-na)}{(1-na)(1-s)}$, where n=200, a=0.00017, and $Y_0$ was set according to an NP range of 1.03 to 1.20 of a conventional silicon-free battery. For the calculated range of $Y_{0,S}$, refer to Table 1.

**Table 1**

| Experiment | Storage proportion | Initial NP relation | Initial NP range |
|---|---|---|---|
| Blank comparative example | NA | $Y_0$ | 1.03-1.20 |
| Comparative example 1 | 70% | $\dfrac{Y_0(1 - 70\% - na)}{(1 - na)(1 - 70\%)}$ | 0.945-1.101 |

(continued)

| Experiment | Storage proportion | Initial NP relation | Initial NP range |
|---|---|---|---|
| Comparative example 2 | 50% | $\dfrac{Y_{0,0}(1-50\%-na)}{(1-na)(1-50\%)}$ | 0.994-1.158 |
| Comparative example 3 | 80% | $\dfrac{Y_{0,0}(1-80\%-na)}{(1-na)(1-80\%)}$ | 0.885-1.031 |

The following describes performance tests of the secondary battery 100.

The battery capacity, extreme storage, and extreme cycling of the secondary battery 100 in the foregoing examples and comparative examples were tested (for the specific method, refer to the foregoing method, and details were not described herein again) to respectively obtain data of N1 (the number of days) and N2 (the number of cycles). For specific parameters, refer to Table 2.

Battery capacity test of secondary battery 100

At 25°C, the secondary battery 100 was charged at 0.5C to a full-charge voltage. Then, the secondary battery 100 was constant-voltage charged at the full-charge voltage until a current is less than or equal to 0.05C, left standing for 30 min, and then discharged at 1C to a full-discharge voltage. A capacity value at the end of discharge was recorded.

From comparison between Example 1 and Comparative example 1, comparison between Example 2 and Comparative example 2, comparison between Example 3 and Comparative example 3 as well as Comparative example 4, comparison between Example 4 and Comparative example 5, and comparison between Example 5 and Comparative example 6, it can be learned that the initial (for example, the first charge or the first discharge) NP designed according to the foregoing formula reduces the design of the NP value of the secondary battery 100, and the obtained battery capacity of the secondary battery 100 is high. In addition, in a case of the same cycle percentage, the service life that the secondary batter 100 is able to reach is the same during both storage and cycling process. In this way, the design of the NP value is determined based on the storage proportion, which is conducive to ensuring high energy density and long service life.

**Table 2**

| Experiment | Storage proportion | Designed NP | Battery capacity (Ah) | N1 (days) | N2 (cycles) | 1.17-0.35S≤NP≤-0.41S+1.36 |
|---|---|---|---|---|---|---|
| Example 1 | 70% | 1.06 | 100.9 | 560 | 1200 | 0.925-1.073 |
| Comparative example 1 | 70% | 1.21 | 93.4 | 560 | 1200 | 0.995-1.155 |
| Example 2 | 50% | 1.024 | 103.7 | 240 | 1200 | 0.995-1.155 |
| Comparative example 2 | 50% | 1.21 | 95.2 | 240 | 1200 | 0.995-1.155 |
| Example 3 | 80% | 1.00 | 104.9 | 960 | 1200 | 0.89-1.032 |
| Comparative example 3 | 80% | 1.10 | 100.0 | 960 | 1200 | 0.89-1.032 |
| Comparative example 4 | 80% | 1.20 | 95.2 | 960 | 1200 | 0.89-1.032 |
| Example 4 | 55% | 1.05 | 100.3 | 293 | 1200 | 0.978-1.135 |
| Comparative example 5 | 55% | 1.20 | 94.2 | 293 | 1200 | 0.978-1.135 |
| Example 5 | 60% | 1.03 | 103.3 | 360 | 1200 | 0.96-1.114 |
| Comparative example 6 | 60% | 1.20 | 94.2 | 360 | 1200 | 0.96-1.114 |

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. This application is not limited to the specific embodiments disclosed in this specification but includes all technical solutions falling within the scope of the claims.

**Claims**

1. An electrode assembly, comprising:

   a positive electrode plate and a negative electrode plate, wherein
   NP corresponding to the electrode assembly with a current capacity retention rate of not less than m and S satisfy the following conditions: $1.17-0.35S \leq NP \leq -0.41S+1.36$, $50\% \leq S \leq 80\%$, and $m \geq 99\%$,
   wherein NP represents a ratio of capacity per unit area of the negative electrode plate to capacity per unit area of the positive electrode plate; S represents a storage proportion of the electrode assembly, wherein the number of storage days that the electrode assembly is able to reach when its capacity retention rate is 80% under extreme storage is denoted as N1, the number of cycles that the electrode assembly is able to reach when its capacity retention rate is 80% under extreme cycling of charge and discharge is denoted as N2, and $S=5N1/(5N1+N2)$; the extreme storage refers to storage of the electrode assembly in 100% SoC at an ambient temperature of 60°C; the extreme cycling refers to the electrode assembly being cyclically charged at a rate of 0.5C and discharged at a rate of 1C at 25°C within a range of 0%-100% SoC; and the current capacity retention rate of the electrode assembly refers to a ratio of a current capacity T1 of the electrode assembly to an initial capacity T2 of the electrode assembly.

2. The electrode assembly according to claim 1, wherein when the storage proportion S is 50%-80%, the NP value of the electrode assembly is 0.89-1.16; and
   optionally, when the storage proportion S is 70%-80%, the NP value of the electrode assembly is 0.95-1.07.

3. The electrode assembly according to claim 1 or 2, wherein the capacity per unit area of the negative electrode plate is denoted as P1, the capacity per unit area of the positive electrode plate is denoted as P2, and P1 and P2 respectively satisfy the following conditions: $2.3\ mAh/cm^2 \leq P1 \leq 8.6\ mAh/cm^2$ and $1.5\ mAh/cm^2 \leq P2 \leq 6.8\ mAh/cm^2$.

4. The electrode assembly according to any one of claims 1 to 3, wherein a coating weight per unit area of the negative electrode plate is within a range of $3.9\ mg/cm^2$ to $13\ mg/cm^2$; optionally, the coating weight per unit area of the negative electrode plate is within a range of $3.9\ mg/cm^2$ to $10\ mg/cm^2$; and/or
   a coating weight per unit area of the positive electrode plate is within a range of $6.5\ mg/cm^2$ to $29\ mg/cm^2$, and optionally, the coating weight per unit area of the positive electrode plate is within a range of $9\ mg/cm^2$ to $21\ mg/cm^2$.

5. The electrode assembly according to any one of claims 1 to 4, wherein the negative electrode plate comprises a negative electrode active material, the negative electrode active material comprising at least one of a silicon material and a carbon material.

6. The electrode assembly according to claim 5, wherein the silicon material comprises at least one of Si and $SiO_z$ ($0<z<2$); and/or

   the carbon material comprises at least one of natural graphite, artificial graphite, mesocarbon microbeads, hard carbon, and soft carbon; and
   optionally, the carbon material comprises natural graphite and artificial graphite.

7. The electrode assembly according to claim 5, **characterized in that** a weight percentage of the silicon material in the negative electrode active material is 3%-50%; and
   optionally, the weight percentage of the silicon material in the negative electrode active material is 3%-25%.

8. The electrode assembly according to any one of claims 1 to 7, wherein NP of the electrode assembly at the first charge or the first discharge is denoted as $Y_{0,S}$, and $Y_{0,S}$ and S satisfy the following condition:

$$\frac{Y_0(1-S-200a)}{(1-200a)(1-S)} \leq Y_{0,s} \leq \frac{Y_0(1-S-50a)}{(1-50a)(1-S)}$$

, wherein, $Y_0$ represents an NP value specified at the first charge or the first discharge of a reference electrode assembly, $1.03 \leq Y_0 \leq 1.2$, and a represents a capacity loss value per cycle of charge and discharge of the reference electrode assembly.

9. The electrode assembly according to claim 8, wherein $Y_{0,S}$ and S satisfy the following condition:

$$\frac{Y_0(1-S-200a)}{(1-200a)(1-S)} \le Y_{0,s} \le \frac{Y_0(1-S-100a)}{(1-100a)(1-S)}$$

10. The electrode assembly according to claim 8 or 9, wherein $Y_0$ further satisfies the following condition: $1.05 \le Y_0 \le 1.15$.

11. The electrode assembly according to claim 8 or 9, wherein a satisfies the following condition: $0.00016 \le a \le 0.00026$; and
optionally, a further satisfies the following condition: $0.00018 \le a \le 0.00024$.

12. The electrode assembly according to any one of claims 1 to 11, wherein the positive electrode plate comprises a positive electrode active material, the positive electrode active material being an active substance capable of deintercalating and intercalating lithium ions.

13. The electrode assembly according to claim 12, wherein the positive electrode active material comprises: one or more of lithium cobalt oxide, lithium nickel oxide, lithium manganese oxide, lithium nickel manganese oxide, lithium nickel cobalt manganese oxide, and lithium nickel cobalt aluminum oxide; and a compound derived from transition metal or non-transition metal; and
optionally, the positive electrode active material comprises a lithium-containing transition metal composite oxide, wherein the transition metal comprises at least one selected from nickel, cobalt, manganese, and aluminum.

14. A secondary battery, comprising:

   a housing;
   the electrode assembly according to any one of claims 1 to 13 accommodated in the housing; and
   an electrolyte filled in the housing.

15. An electric apparatus, comprising the secondary battery according to claim 14.

FIG. 1

Determine a storage proportion of a target secondary battery denoted as S, and determine an NP value of a reference secondary battery at the first charge or the first discharge denoted as $Y_0$ ⟩~S100

Determine, according to a formula $Y_{0,S} = \dfrac{Y_0(1-s-na)}{(1-na)(1-s)}$, an NP value of the target secondary battery at the first charge or the first discharge denoted as $Y_{0,S}$, where, n represents the number of cycles of charge and discharge after which NP of the reference secondary battery is equal to NP of the target secondary battery, and a represents a capacity loss value per cycle of charge and discharge of the reference secondary battery ⟩~S200

FIG. 2

S200

Obtain a change relationship of an NP value of a target secondary battery during cycling and perform fitting to obtain the following formula:

$$Y_{n,S} = \frac{Y_{0,s}}{\left(1 - n\frac{s}{1-s}\right)}$$

where $Y_{n,S}$ reprsents an NP value of the target secondary battery at the n-th cycle — S210

Obtain a change relationship of an NP value of a reference secondary battery during cycling and perform fitting to obtain the following formula:

$$Y_n = \frac{Y_0}{(1-na)}$$

where $Y_{n,0}$ represents an NP value of the reference secondary battery at the n-th cycle — S220

Obtain a formula $Y_{0,s} = \frac{Y_0(1-s-na)}{(1-na)(1-s)}$

according to the principle of $Y_{n,S} = Y_n$ and determine an NP value of the target secondary battery at the first charge or the first discharge — S230

FIG. 3

## INTERNATIONAL SEARCH REPORT

| | International application No. |
|---|---|
| | **PCT/CN2022/133402** |

**A. CLASSIFICATION OF SUBJECT MATTER**

H01M4/13(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 电池, 电极, 容量, 面积, 存储, 循环, 充放电, battery, cell, capacity, area, storage, cycle, charge, recharge

**C. DOCUMENTS CONSIDERED TO BE RELEVANT**

| Category* | Citation of document, with indication, where appropriate, of the relevant passages | Relevant to claim No. |
|---|---|---|
| A | CN 112563559 A (CONTEMPORARY AMPEREX TECHNOLOGY CO., LTD.) 26 March 2021 (2021-03-26)<br>entire document | 1-15 |
| A | CN 109103496 A (SHANGHAI INSTITUTE OF SPACE POWER-SOURCES) 28 December 2018 (2018-12-28)<br>entire document | 1-15 |
| A | CN 109671999 A (CHINA AUTOMOTIVE BATTERY RESEARCH INSTITUTE CO., LTD.) 23 April 2019 (2019-04-23)<br>entire document | 1-15 |
| A | WO 2012147929 A1 (NEC CORP.) 01 November 2012 (2012-11-01)<br>entire document | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 August 2023** | **03 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

| International application No. |
| --- |
| **PCT/CN2022/133402** |

| Patent document cited in search report | | | Publication date (day/month/year) | Patent family member(s) | | | Publication date (day/month/year) |
| --- | --- | --- | --- | --- | --- | --- | --- |
| CN | 112563559 | A | 26 March 2021 | WO | 2021057428 | A1 | 01 April 2021 |
| | | | | IN | 202217004515 | A | 04 February 2022 |
| | | | | EP | 3955358 | A1 | 16 February 2022 |
| | | | | KR | 20220036961 | A | 23 March 2022 |
| | | | | US | 2022166018 | A1 | 26 May 2022 |
| | | | | JP | 2022534453 | W | 29 July 2022 |
| | | | | CN | 115295791 | A | 04 November 2022 |
| CN | 109103496 | A | 28 December 2018 | | None | | |
| CN | 109671999 | A | 23 April 2019 | CN | 109671999 | B | 12 January 2021 |
| WO | 2012147929 | A1 | 01 November 2012 | US | 2014045069 | A1 | 13 February 2014 |
| | | | | JPWO | 2012147929 | A1 | 28 July 2014 |
| | | | | JP | 6052168 | B2 | 27 December 2016 |

Form PCT/ISA/210 (patent family annex) (July 2022)